# EUROPÄISCHE PATENTSCHRIFT

(11) **EP 1 371 519 B1**
(45) Veröffentlichungstag und Bekanntmachung des Hinweises auf die Patenterteilung: **30.08.2006**
(21) Anmeldenummer: 03011694.1
(22) Anmeldetag: 23.05.2003
(51) Int. Cl.: B60N 2/56, A47C 7/74, B60H 1/00

(54) **Überwachungsvorrichtung für in Serie geschaltete elektrische Heizelemente**
Monitoring device for electric heating elements connected in series
Dispositif de surveillance pour éléments chauffants électriques branchés en série

(30) Priorität: 12.06.2002 AT 8862002
(43) Veröffentlichungstag der Anmeldung: 17.12.2003
(73) Patentinhaber: I.G. Bauerhin GmbH, 63584 Gründau (DE)
(72) Erfinder: Michelmann, Jochen, 63571 Gelnhausen (DE)
(74) Vertreter: Wagner, Carsten

(56) Entgegenhaltungen:
- EP-A- 0 863 450
- AT-B- 407 937
- DE-A- 4 142 774
- DE-A- 19 752 135
- DE-A- 19 909 336
- DE-C- 3 734 886
- DE-U- 8 137 914
- US-A- 4 825 048
- US-A- 4 926 025

## Beschreibung

Die Erfindung betrifft eine Überwachungsvorrichtung für in Serie geschaltete elektrische Heizelemente, ein entsprechendes Verfahren sowie eine Verwendung.

DE 199 09 336, DE 37 25 814 und G 8137914 offenbaren Heizelemente, die sich durch Serienschaltung elektrisch verbinden lassen oder auch intern durch Serienschaltung verbunden sind und somit an einer gemeinsamen Strom-/Spannungsquelle angeschlossen werden können. Dies hat den Vorteil, daß Anforderungen für höhere Spannungen wie beispielsweise 24 Volt in LKWs oder 42 Volt in der neuesten Generation von PKWs auf komfortable Weise mittels Serienschaltung von erprobten Heizelementen kleinerer Betriebsspannung realisiert werden können.

Zum Beheizen von Sitzen insbesondere in Personenkraftwagen werden hauptsächlich Leiter aus Kupfer, Kohlefaser (Karbon) oder Legierungen insbesondere Kupfer-Nickel-, Chrom-Nickel- und Eisenlegierungen eingesetzt. Diese Heizleiter erleiden trotz dieser Materialien in Abhängigkeit von den Umgebungsbedingungen wie Korrosion durch Wasser und Salzeinfluß sowie mechanischen Belastungen durch die ständige Bewegung und Belastung einer aufsitzenden Person Beschädigungen. Aufgrund dieser Beschädigungen in Form von Querschnittsreduzierungen, folgen lokale Überhitzungen und schließlich der Bruch des Heizleiters, was in einer verkürzten Lebensdauer der Heizung resultiert.
Folglich kann es bei den viele einzelne parallele Heizleiter aufweisenden Heizelementen im Laufe der Zeit aufgrund einer fortschreitenden Leiterquerschnittsreduzierung zu einem Brand kommen, die auf die Erhöhung des Widerstandswertes und dem damit einhergehenden höheren Leistungsabfall an diesem Widerstand und der dadurch immer höher werdenden Temperatur zurückzuführen ist.

Es ergibt sich somit das Problem, eine Vorrichtung bereitzustellen, die diese Nachteile vermeidet, insbesondere die einen Brand wegen lokaler Überhitzung wirksam ausschließt.

Dieses Problem wird erfindungsgemäß durch eine Vorrichtung nach Anspruch 1, ein Verfahren nach Anspruch 10 und eine Verwendung nach Anspruch 19 gelöst.
Die erfindungsgemäße Überwachungsvorrichtung für in Serie geschaltete elektrische Heizelemente einer elektrischen Heizung, insbesondere für Sitzheizelemente für Kraftfahrzeuge, weist mindestens einen elektrischen Abgriff zwischen zwei Heizelementen auf, der mit einer Auswerteeinheit elektrisch verbunden ist, wobei die Auswerteeinheit die abgegriffene Spannung mit internen Grenzwerten vergleicht, so daß bei Über- oder Unterschreiten der Grenzwerte die elektrische Stromzufuhr der Heizung unterbrochen wird. Bei Überschreiten eines Grenzwertes liegt an der zu messenden Stelle eine kritische Erhöhung des Widerstandswertes vor, während bei Unterschreiten eines Grenzwertes an einer anderen Stelle der Reihenschaltung der Heizelemente eine kritische Erhöhung des Widerstandswertes vorliegt, so daß die Gefahr eines Brandes nicht mehr auszuschließen ist und folglich die Stromzufuhr unterbrochen wird.

Es ist auch denkbar, daß der Absolutwert der abgegriffenen Spannung der jeweiligen Heizelemente beim ersten Einschalten der Auswerteeinheit eingelesen wird und während des weiteren Betriebs sämtliche Spannungswerte mit dem gespeicherten ersten Meßwert verglichen werden und bei Über- oder Unterschreiten auf den ersten Meßwert bezogenen Toleranzen (diese ergeben unter Berücksichtigung des ersten Meßwertes die entsprechenden Grenzwerte) die elektrische Stromzufuhr der Heizung, beispielsweise über ein angesteuertes Relais, unterbrochen wird. Der Vorteil hierbei ist, daß unterschiedliche Heizungselemente verbaut werden können, ohne eine Neuprogrammierung vornehmen zu müssen.

Dabei ist es vorteilhaft, wenn die Auswertung der abgegriffenen Spannung analog mittels Fensterkomperator (elektrische Schaltung zum Überprüfen ob ein Messwert innerhalb eines Wertebereichs (Fensters) liegt) oder digital mittels A/D-Wandler und Mikroprozessor erfolgt, da auf diese Weise eine sichere Funktionsweise gewährleistet ist.

Weiterhin ist es von Vorteil, wenn sich die Spannungsreferenz der Auswerteeinheit zur Ermittlung der abgegriffenen Spannung proportional zur Betriebsspannung der Heizung verhält, weil auf diesem Weg eine eventuell auftretende Schwankungen der Betriebsspannung berücksichtigende und somit davon unabhängige Ermittlung der abgegriffenen Spannung ermöglicht wird; denkbar ist beispielsweise eine sogenannte Meßbrückenschaltung, bei der zwei in Reihe geschaltete Widerstände der Auswerteeinheit parallel zu zwei in Reihe geschalteten Widerständen von Heizelementen geschaltet sind und nach einem entsprechenden Abgleich aufgrund der bekannten elektrischen Gesetzmäßigkeiten die notwendigen Größen ermittelt werden können.

Darüberhinaus ist es vorteilhaft, wenn nach Über- oder Unterschreiten der Grenzwerte die elektrische Stromzufuhr erst nach einer Zeitkonstante unterbrochen wird, um eine definierte Verzögerung des Abschaltens im Fehlerfall bereitzustellen, da insbesondere bei Kupferleitem während der Aufheizphase durch den Temperaturkoeffizienten in den Kupferleitern kurzzeitig Spannungsschwankungen auftreten, die fälschlicherweise einen Fehlerfall vortäuschen, jedoch lediglich temporärer Natur sind und folglich _{"}übergangen" werden und damit im Einzelfall einen störungsfreien Lauf gewährleistet.

In der Praxis hat es sich in vorteilhafter Weise bewährt, wenn die Zeitkonstante im Bereich von 5 Sekunden bis 5 Minuten liegt.

Darüberhinaus ist es von Vorteil, wenn die Auswerteeinheit die Temperatur der Heizung regelt und/oder eine Temperaturfühlerüberwachung aufweist, da auf diese Weise ein koordinierter und sicherer Betrieb möglich ist, wenn beispielsweise eine Regelung der Heizung über einen Temperaturfühler gewünscht wird.

Schließlich hat es sich in der Praxis bewährt, wenn die elektrischen Heizelemente gewirkt, gestrickt oder gewebt sind und unisolierte, parallelgeschaltete Heizleiter, insbesondere aus Kohlefasern (Karbon), aufweisen, da die unisolierten Heizleiter bei Kurzschluss zwischen metallischen Elementen des Sitzes ansonsten sehr starke Überhitzungen und Brände verursachen können.

Bei besonderen Ausführungsformen von Heizelementen aus Karbon, welche aus der DE 4142774 und AT 407937 bekannt sind, wird der zugehörige Temperaturfühler bei Ausfall des lokal um diesen Temperaturfühler liegenden Heizfeldes nicht mehr beheizt, obwohl der Rest des Heizelementes noch voll funktionstüchtig sein kann und Wärme erzeugt. Dadurch ist der Sollwert gestört und die Temperatur kann ungeregelt bis zum Brandfall steigen. Diese Fehlfunktion oben genannter Heizelemente verursacht eine Verschiebung der Teilspannungen, was durch die Erfindung erkannt wird und zum rechtzeitigen Abschalten der elektrischen Stromzufuhr führt.

Mit der erfindungsgemäßen Vorrichtung ist es bei Bedarf auch möglich, die Daten statistisch zu verarbeiten, zu speichern und abzurufen.

Die oben aufgeführten Vorteile gelten in analogem Sinne auch für das erfindungsgemäße Verfahren sowie Verwendungen der vorgestellten Vorrichtung und des Verfahrens zur Überwachung für in Serie geschaltete elektrische Heizelemente einer elektrischen Heizung, insbesondere für Sitzheizelemente für Kraftfahrzeuge.

Das nachfolgende Beispiel dient zur näheren Erläuterung der Erfindung.

In den Zeichnungen zeigen:

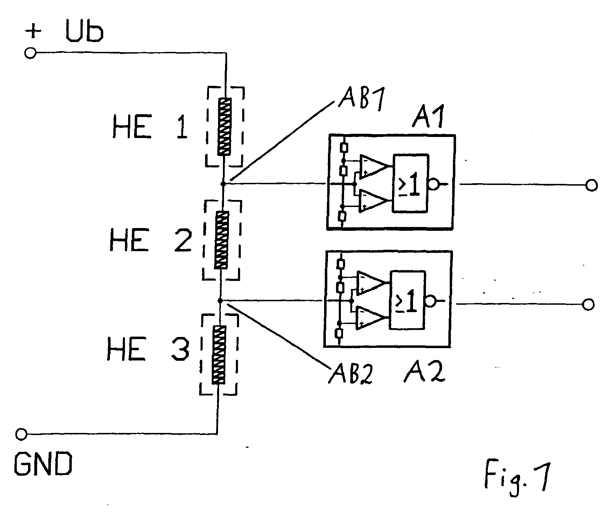

Figur 1 - eine schematische Funktionsskizze einer Ausgestaltung der erfindungsgemäßen Überwachungsvorrichtung.

In Figur 1 ist eine schematische Funktionsskizze einer Ausgestaltung der erfindungsgemäßen Überwachungsvorrichtung gezeigt.

Drei Heizelemente HE 1, HE 2, HE 3 sind in Serie geschaltet und an einer Spannungsquelle mit einer Betriebsspannung U_{b} angeschlossen. Hinter dem ersten Heizelement HE1 und dem zweiten Heizelement HE2 ist jeweils eine mit einem Komperator ausgestattete Auswerteeinheit A1 bzw. A2 über einen Abgriff AB1 bzw. AB2 elektrisch angeschlossen.

## Patentansprüche

1. Überwachungsvorrichtung für in Serie geschaltete elektrische Heizelemente einer elektrischen Heizung, insbesondere für Sitzheizelemente für Kraftfahrzeuge, mit mindestens einem elektrischen Abgriff zwischen zwei Heizelementen, der mit einer Auswerteeinheit elektrisch verbunden ist, wobei die Auswerteeinheit die abgegriffene Spannung mit internen Grenzwerten vergleicht, so daß bei Über- oder Unterschreiten der Grenzwerte die elektrische Stromzufuhr der Heizung unterbrochen wird.

2. Überwachungsvorrichtung nach Anspruch 1, **dadurch gekennzeichnet, daß** der Absolutwert der abgegriffenen Spannung der jeweiligen Heizelemente beim ersten Einschalten der Auswerteeinheit eingelesen wird und während des weiteren Betriebs sämtliche Spannungswerte mit dem gespeicherten ersten Meßwert verglichen werden und bei Über- oder Unterschreiten auf den ersten Meßwert bezogenen Toleranzen die elektrische Stromzufuhr der Heizung unterbrochen wird.

3. Überwachungsvorrichtung nach einem der Ansprüche 1 bis 2, **dadurch gekennzeichnet, daß** die Auswertung der abgegriffenen Spannung analog mittels Fensterkomperator oder digital mittels A/D-Wandler und Mikroprozessor erfolgt.

4. Überwachungsvorrichtung nach einem der Ansprüche 1 bis 3, **dadurch gekennzeichnet, daß** sich die Spannungsreferenz der Auswerteeinheit zur Ermittlung der abgegriffenen Spannung proportional zur Betriebsspannung der Heizung verhält.

5. Überwachungsvorrichtung nach einem der Ansprüche 1 bis 4, **dadurch gekennzeichnet, daß** nach Über- oder Unterschreiten der Grenzwerte die elektrische Stromzufuhr erst nach einer Zeitkonstante unterbrochen wird.

6. Überwachungsvorrichtung nach Anspruch 5, **dadurch gekennzeichnet, daß** die Zeitkonstante im Bereich von 5 Sekunden bis 5 Minuten liegt.

7. Überwachungsvorrichtung nach einem der Ansprüche 1 bis 6, **dadurch gekennzeichnet, daß** die Auswerteeinheit die Temperatur der Heizung regelt und/oder eine TemperaturffiMerüberwachung aufweist.

8. Überwachungsvorrichtung nach einem der Ansprüche 1 bis 7, **dadurch gekennzeichnet, daß** die elektrischen Heizelemente gewirkt, gestrickt oder gewebt sind und unisolierte, parallelgeschaltete Heizleiter aufweisen.

9. Überwachungsvorrichtung nach Anspruch 8, **dadurch gekennzeichnet, daß** die Heizleiter aus Kohlefasern bestehen.

10. Verfahren zur Überwachung für in Serie geschaltete elektrische Heizelemente einer elektrischen Heizung, insbesondere für Sitzheizelemente fiir Kraftfahrzeuge, wobei über mindestens einen elektrischen Abgriff zwischen zwei Heizelementen, der mit einer Auswerteeinheit elektrisch verbunden ist, eine abgegriffene Spannung mit internen Grenzwerten in der Auswerteeinheit verglichen wird, so daß bei Über- oder Unterschreiten der Grenzwerte die elektrische Stromzufuhr der Heizung unterbrochen wird.

11. Verfahren nach Anspruch 10, **dadurch gekennzeichnet, daß** der Absolutwert der abgegriffenen Spannung der jeweiligen Heizelemente beim ersten Einschalten der Auswerteeinheit eingelesen wird und während des weiteren Betriebs sämtliche Spannungswerte mit dem gespeicherten ersten Meßwert verglichen werden und bei Über- oder Unterschreiten auf den ersten Meßwert bezogenen Toleranzen die elektrische Stromzufuhr der Heizung unterbrochen wird. ..

12. Verfahren nach einem der Ansprüche 10 bis 11, **dadurch gekennzeichnet, daß** die Auswertung der abgegriffenen Spannung analog mittels Fensterkomperator oder digital mittels A/D-Wandler und Mikroprozessor erfolgt.

13. Verfahren nach einem der Ansprüche 10 bis 12, **dadurch gekennzeichnet, daß** sich die Spannungsreferenz der Auswerteeinheit zur Ermittlung der abgegriffenen Spannung proportional zur Betriebsspannung der Heizung verhält.

14. Verfahren nach einem der Ansprüche 10 bis 13, **dadurch gekennzeichnet, daß** nach Über- oder Unterschreiten der Grenzwerte die elektrische Stromzufuhr erst nach einer Zeitkonstante unterbrochen wird.

15. Verfahren nach Anspruch 14, **dadurch gekennzeichnet, daß** die Zeitkonstante im Bereich von 5 Sekunden bis 5 Minuten liegt.

16. Verfahren nach einem der Ansprüche 10 bis 15, **dadurch gekennzeichnet, daß** die Auswerteeinheit die Temperatur der Heizung regelt und/oder eine Temperaturfiihlerüberwachung aufweist.

17. Verfahren nach einem der Ansprüche 10 bis 16, **dadurch gekennzeichnet, daß** die elektrischen Heizelemente gewirkt, gestrickt oder gewebt sind und unisolierte, parallelgeschaltete Heizleiter aufweisen.

18. Verfahren nach Anspruch 17, **dadurch gekennzeichnet, daß** die Heizleiter aus Kohlefasern bestehen.

19. Verwendung einer Vorrichtung nach einem der Ansprüche 1 bis 9 und/oder eines Verfahrens nach einem der Ansprüche 10 bis 18 zur Überwachung für in Serie geschaltete elektrische Heizelemente einer elektrischen Heizung, insbesondere für Sitzheizelemente für Kraftfahrzeuge.

## Claims

1. Monitoring device for electric heating elements connected in series of an electric heating system, in particular for seat heating elements in motor vehicles, with at least one electrical pick-up between two heating elements, which is connected electrically with an evaluation unit, whereby the evaluation unit compares the picked-up voltage with internal threshold values, so that if the threshold values are exceeded or fallen below the electrical power supply to the heating system is interrupted.

2. Monitoring device according to claim 1, **characterised in that** the absolute value of the picked-up voltage of the respective heating elements is entered when first switching on the evaluation unit and during further operation all voltage values are compared with the saved first measured value and if the threshold values are exceeded or fallen below the electrical power supply to the heating system is interrupted.

3. Monitoring device according to one of claims 1 to 2, **characterised in that** the evaluation of the picked-up voltage takes place in analogue mode by means of window comparators or in digital mode by means of A/D converters and microprocessors.

4. Monitoring device according to one of claims 1 to 3, **characterised in that** the voltage reference of the evaluation unit for determining the picked-up voltage behaves in proportion to the operating voltage of the heating system.

5. Monitoring device according to one of claims 1 to 4, **characterised in that** after exceeding or falling below the threshold values the electrical power supply is only interrupted after a time constant.

6. Monitoring device according to claim 5, **characterised in that** the time constant lies within a range of 5 seconds to 5 minutes.

7. Monitoring device according to one of claims 1 to 6, **characterised in that** the evaluation unit controls the temperature of the heating system and/or comprises a temperature detecting monitor.

8. Monitoring device according to one of claims 1 to 7, **characterised in that** the electrical heating elements are worked, knitted or woven and comprise uninsulated parallel connected heating conductors.

9. Monitoring device according to claim 8, **characterised in that** the heating conductors are made of carbon fibre.

10. Method for monitoring electrical heating elements connected in series of an electrical heating system, in particular for seat heating elements in motor vehicles, whereby by means of at least one electrical pick-up between two heating elements, which is connected electrically to an evaluation unit, the picked-up voltage is compared with internal threshold values in the evaluation unit, so that if it exceeds or falls below the threshold values the electrical power supply to the heating system is interrupted.

11. Method according to claim 10, **characterised in that** the absolute value of the picked-up voltage of the respective heating elements is entered when first switching on the evaluation unit and during further operation all of the voltage values are compared with the saved first measured value, and if the voltage exceeds or falls below tolerances related to the first measured value the electrical power supply to the heating system is interrupted.

12. Method according to one of claims 10 to 11, **characterised in that** the evaluation of the picked-up voltage takes place in analogue mode by means of window comparators or in digital mode by means of A/D converters and microprocessors.

13. Method according to one of claims 10 to 12, **characterised in that** the voltage reference of the evaluation unit for determining the picked-up voltage behaves in proportion to the operating voltage of the heating system.

14. Method according to one of claims 10 to 13, **characterised in that** after exceeding or falling below the threshold values the electrical power supply is only interrupted after a time constant.

15. Method according to claim 14, **characterised in that** the time constant lies within a range of 5 seconds to 5 minutes.

16. Method according to one of claims 10 to 15, **characterised in that** the evaluation unit controls the temperature of the heating system and/or comprises a temperature detecting monitor.

17. Method according to one of claims 10 to 16, **characterised in that** the electrical heating elements are worked, knitted or woven and comprise uninsulated parallel connected heating conductors.

18. Method according to claim 17, **characterised in that** the heating conductors are made of carbon fibre.

19. Use of a device according to one of claims 1 to 9 and/or a method according to one of claims 10 to 18 for monitoring electrical heating elements connected in series of an electrical heating system, in particular for seat heating elements in motor vehicles.

## Revendications

1. Dispositif de surveillance pour des éléments chauffants électriques branchés en série d'un chauffage électrique, en particulier pour des éléments chauffants de siège pour véhicules automobiles, comprenant au moins une prise électrique entre deux éléments chauffants, laquelle est reliée électriquement à une unité d'analyse, l'unité d'analyse comparant la tension prélevée avec des valeurs limites internes, de sorte que l'arrivée du courant électrique du chauffage est interrompue lorsque les valeurs limites sont franchies vers le haut ou vers le bas.

2. Dispositif de surveillance selon la revendication 1, **caractérisé en ce que** la valeur absolue de la tension prélevée de chacun des éléments chauffants est lue lors de la première mise en route de l'unité d'analyse et toutes les valeurs de tension sont comparées avec la première valeur de mesure mémorisée pendant l'exploitation ultérieure et l'arrivée du courant électrique du chauffage est interrompue lorsque les tolérances rapportées à la première valeur de mesure sont franchies vers le haut ou vers le bas.

3. Dispositif de surveillance selon l'une quelconque des revendications 1 à 2, **caractérisé en ce que** l'analyse de la tension prélevée s'effectue de façon analogique au moyen d'un comparateur à fenêtre, ou de façon numérique au moyen d'un convertisseur analogique/numérique et d'un microprocesseur.

4. Dispositif de surveillance selon l'une quelconque des revendications 1 à 3, **caractérisé en ce que** la référence de tension de l'unité d'analyse pour la détermination de la tension prélevée se comporte de façon proportionnelle à la tension de service du chauffage.

5. Dispositif de surveillance selon l'une quelconque des revendications 1 à 4, **caractérisé en ce que**, après que les valeurs limites sont franchies vers le haut ou vers le bas, l'arrivée du courant électrique n'est interrompue qu'après une constante de temps.

6. Dispositif de surveillance selon la revendication 5, **caractérisé en ce que** la constante de temps se situe dans la plage de 5 secondes à 5 minutes.

7. Dispositif de surveillance selon l'une quelconque des revendications 1 à 6, **caractérisé en ce que** l'unité d'analyse régule la température du chauffage et/ou présente une surveillance par sonde de température.

8. Dispositif de surveillance selon l'une quelconque des revendications 1 à 7, **caractérisé en ce que** les éléments chauffants électriques sont maillés, tricotés ou tissés et présentent des conducteurs chauffants non isolés et branchés en parallèle.

9. Dispositif de surveillance selon la revendication 8, **caractérisé en ce que** les conducteurs chauffants sont à base de fibres de carbone.

10. Procédé de surveillance pour des éléments chauffants électriques branchés en série d'un chauffage électrique, en particulier pour des éléments chauffants de siège pour véhicules automobiles, une tension prélevée étant comparée avec des valeurs limites internes dans une unité d'analyse par au moins une prise électrique entre deux éléments chauffants, qui est reliée électriquement à l'unité d'analyse, de sorte que, lorsque les valeurs limites sont franchies vers le haut ou vers le bas, l'arrivée du courant électrique du chauffage est interrompue.

11. Procédé selon la revendication 10, **caractérisé en ce que** la valeur absolue de la tension prélevée des éléments chauffants concernés est lue lors de la première mise en route de l'unité d'analyse et toutes les valeurs de tension sont comparées pendant l'exploitation ultérieure avec la première valeur mémorisée et, lorsque les tolérances rapportées à la première valeur de mesure sont franchies vers le haut ou vers le bas, l'arrivée du courant électrique du chauffage est interrompue.

12. Procédé selon l'une quelconque des revendications 10 à 11, **caractérisé en ce que** l'analyse de la tension prélevée s'effectue de façon analogique au moyen d'un comparateur à fenêtre, ou de façon numérique au moyen d'un convertisseur analogique/numérique et d'un microprocesseur.

13. Procédé selon l'une quelconque des revendications 10 à 12, **caractérisé en ce que** la référence de tension de l'unité d'analyse pour déterminer la tension prélevée se comporte de façon proportionnelle à la tension de service du chauffage.

14. Procédé selon l'une quelconque des revendications 10 à 13, **caractérisé en ce que** l'arrivée du courant électrique n'est interrompue qu'après une constante de temps après que les valeurs limites sont franchies vers le haut ou vers le bas.

15. Procédé selon la revendication 14, **caractérisé en ce que** la constante de temps se situe dans la plage de 5 secondes à 5 minutes.

16. Procédé selon l'une quelconque des revendications 10 à 15, **caractérisé en ce que** l'unité d'analyse régule la température du chauffage et/ou présente une surveillance par sonde de température.

17. Procédé selon l'une quelconque des revendications 10 à 16, **caractérisé en ce que** les éléments chauffants électriques sont maillés, tricotés ou tissés et présentent des conducteurs chauffants non isolés et branchés en parallèle.

18. Procédé selon la revendication 17, **caractérisé en ce que** les conducteurs chauffants sont à base de fibres de carbone.

19. Utilisation d'un dispositif selon l'une quelconque des revendications 1 à 9 et/ou d'un procédé selon l'une quelconque des revendications 10 à 18 pour la surveillance pour des éléments de chauffage électriques branchés en série d'un chauffage électrique, en particulier pour des éléments chauffants de siège pour véhicules automobiles.
